Europäisches Patentamt

European Patent Office

Office européen des brevets

(11) Veröffentlichungsnummer: **0 480 149 A2**

## (12) EUROPÄISCHE PATENTANMELDUNG

(21) Anmeldenummer: **91114057.2**

(22) Anmeldetag: **22.08.91**

(51) Int. Cl.5: **B23K 10/00**, B23K 9/10

(30) Priorität: **12.10.90 DE 4032395**

(43) Veröffentlichungstag der Anmeldung:
**15.04.92 Patentblatt 92/16**

(84) Benannte Vertragsstaaten:
**AT CH DE ES FR GB IT LI NL SE**

(71) Anmelder: **MESSER LINCOLN GMBH**
**Lärchenstrasse 137**
**W-6230 Frankfurt/Main 83(DE)**

(72) Erfinder: **Hahn, Günter**
**Aachener Strasse 10**
**W-6053 Obertshausen(DE)**
Erfinder: **Reichelt, Harald**
**Kleebergstrasse 7**
**W-6000 Franfurt/Main-1(DE)**

(74) Vertreter: **Roesner, Werner**
**Geierfeld 45**
**W-6232 Bad Soden-Altenhain(DE)**

(54) **Verfahren und Vorrichtung zum Schweissen und Schneiden.**

(57) Bei einem Verfahren zum Schweißen oder Schneiden mit einem mit elektrischem Bogen arbeitenden Brenner, vorzugsweise Plasmabrenner, wird die Zerstörung von Düse und/oder Stromquelle bei einem Kurzschluß zwischen Elektrode und Düse des Plasmabrenners dadurch verhindert sowie gewährleistet, daß eine Bedienungsperson bei einem Kurzschluß nicht zu Schaden kommt, wenn gemäß der Erfindung bei einer Änderung des elektrischen Widerstandes zwischen Elektrode und Düse, insbesondere bei einem Kurzschluß von Elektrode und Düse des Plasmabrenners ein Steuersignal gebildet und einem Schaltglied eingespeist wird, das in Abgängigkeit davon die Energiezufuhr zum elektrischen Bogen verhindert.

Die Erfindung betrifft ein Verfahren zum Schweißen oder Schneiden mit einem mit elektrischem Bogen arbeitenden Brenner, vorzugsweise Plasmabrenner.

Das an sich bekannte Schweißen oder Schneiden dient im wesentlichen zum Fügen oder Trennen von metallischen Werkstoffen unter Anwendung von Wärme. Beim elektrischen Licht- oder Plasmabogen wird die hohe Temperatur des Licht- oder Plasmabogens zum Schmelzen des Werkstoffs ausgenutzt. Der Licht- oder Plasmabogen ist Bestandteil eines Schweiß- bzw. Schneidstromkreises, in dem auch eine Stromquelle vorzugsweise eine Konstantstromquelle angeordnet ist, die in der Regel eine Leerlaufspannung in der Größenordnung von 400 Volt aufweist.

Bei eingeschalteter Stromquelle liegt somit an der Elektrode des Plasmabrenners diese hohe Leerlaufspannung an. Kommt nun aus irgendwelchen Gründen die Elektrode mit der vom Plasmabrenner gegenüber der Elektrode isoliert angeordneten Düse in Verbindung, so entsteht ein Kurzschluß und an der Düse liegt ebenfalls eine erhöhte Spannung an.

Dies kann einerseits zu einer Zerstörung der Düse sowie der mit der Düse verbundenen Teile der Konstantstromquelle führen. Darüber hinaus kann eine Bedienungsperson, die mit der nunmehr spannungsführenden Düse in Berührung kommt, aufgrund der hohen Spannung u. U. zu Schaden kommen.

Der Erfindung liegt daher die Aufgabe zugrunde, ein Verfahren und eine Vorrichtung hierfür anzugeben, die es ermöglichen, die Zerstörung von Düse und/oder Stromquelle bei einem Kurzschluß zwischen Elektrode und Düse des Plasmabrenners zu verhindern und die auch gewährleisten, daß eine Bedienungsperson bei einem Kurzschluß nicht zu Schaden kommt. Diese Aufgabe wird durch die im Anspruch 1 angegebenen Merkmale gelöst. Dabei wird vorteilhaft bei einem plötzlich auftretenden Kurzschluß zwischen Elektrode und Düse, z. B. infolge eines Lösens der Elektrode im Brenner, die Energiezufuhr zum elektrischen Bogen verhindert, also die Konstantstromquelle abgeschaltet.

Tritt vor dem Schweiß- oder Schneidvorgang, z. B. bei ausgeschalteter Stromquelle ein Kurzschluß z. B. infolge unrichtiger Montage von Düse und Elektrode auf, so wird vorteilhaft durch ein Schaltglied/Relais der Einschaltbefehl für die Stromquelle bzw. deren Leistungsteil verriegelt.

Durch diese Maßnahme wird sowohl der Bedienungsmann als auch die Vorrichtung zum Schweißen oder Schneiden geschützt.

Besonders einfach wird ein Steuersignal zum Abschalten bzw. Verriegeln der Stromquelle dadurch gebildet, wenn der elektrische Widerstand zwischen der Düse und der Elektrode gemessen und mit einem Sollwert verglichen wird. Dabei kann die Widerstandsmessung durch ein separates Meßgerät erfolgen, dessen Ausgangssignal einem Soll-Istwert von einem Sollwertgeber zugeleitet wird.

Eine besonders einfache Vorrichtung, die kein separates Meßgerät bzw. Sollwertgeber aufweist, ist in dem Anspruch 3 angegeben.

Dabei erfolgt im einfachsten Fall eine Reihenschaltung von Gleichspannungsquelle und Schaltglied, wobei im Kurzschlußfall der Stromkreis geschlossen und das Schaltglied durch den fließenden Strom erregt und der Schaltkontakt geöffnet wird.

Wenn das Schaltglied sowohl parallel zu Düse und Elektrode als auch parallel zur Gleichspannungsquelle geschaltet ist, wird das Schaltglied durch den fließenden Strom erregt und in der Schließstellung gehalten. Bei einem Kurzschluß wird dem Schaltglied kein ausreichender Strom mehr zugeführt und das Schaltglied öffnet deshalb den Schaltkontakt, wodurch die Energiezufuhr unterbrochen bzw. verhindert wird. Weiterhin wird bei dieser Schaltung der Vorteil erreicht, daß auch bei einem Ausfall der im Hilfsstromkreis angeordneten Gleichspannungsquelle eine Abschaltung der Konstantstromquelle erfolgt, da dem Schaltglied kein ausreichender Strom mehr zugeführt wird.

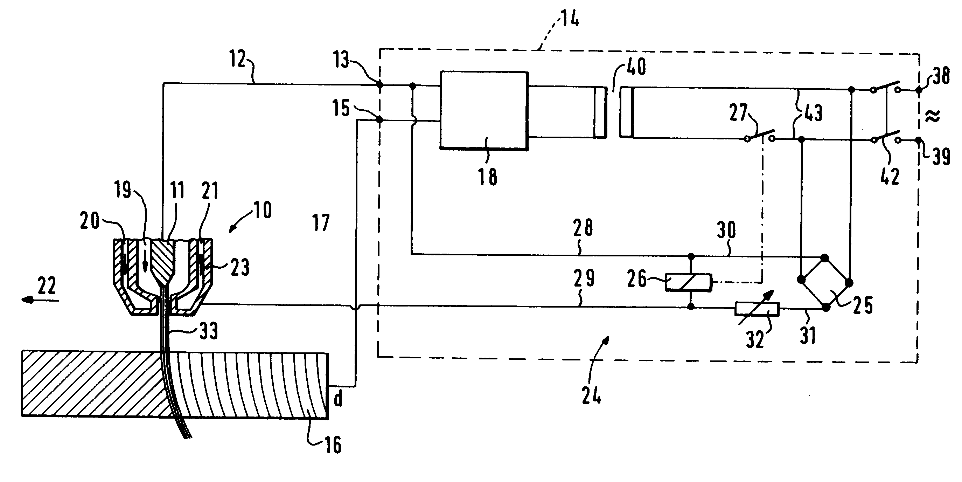

Ein Ausführungsbeispiel der Erfindung ist in der Zeichnung dargestellt und wird im folgenden näher beschrieben:

In der Zeichnung ist als Werkzeug ein Plasmabrenner 10 vorgesehen, der eine Elektrode 11 aufweist, die über Leitung 12 mit dem ersten Ausgang 13 einer Stromquelle 14, vorzugsweise einer Plasmastromquelle, verbunden ist. Ein zweiter Ausgang 15 der Stromquelle 14 ist über Leitung 17 an das als Anode geschaltete Werkstück 16 gelegt. Die Stromquelle 14 ist schematisch dargestellt und weist u. a. einen über Anschlüsse 38, 39 an einem Versorgungsnetz angeschlossenen Transformator 40 mit nachgeschaltetem Leistungsteil 18, (vorzugsweise Thyristorbrücke B6) auf, wobei die Thyristoren der Brücke über nicht dargestellte Baugruppen ansteuerbar sind und damit die Leistung der Stromquelle regelbar ist.

Die Plasmagaszufuhr ist mit 19, die Kühlwasserzufuhr mit 20, die Kühlwasserableitung mit 21 sowie die Vorschubrichtung mit 22 bezeichnet.

An die Elektrode 11 sowie an eine, gegenüber der Elektrode 11 isoliert angeordnete Kupferdüse 23 ist ein Hilfsstromkreis 24 angeschlossen. Im Hilfsstromkreis 24 ist eine Spannungsquelle, vorzugsweise Gleichspannungsquelle vorgesehen, die beim Ausführungsbeispiel durch den mit den Anschlüssen 38 und 39 in Verbindung stehenden Brückengleichrichter 25 gebildet wird. Ferner ist im Hilfsstromkreis 24 ein Schaltglied/Relais 26 angeordnet, dessen Schaltkontakt 27 im Stromkreis 43

der Konstantstromquelle 14 liegt.

Das Relais 26 ist über die Leitungen 28, 29 parallel zu Düse 23 und Elektrode 11 und über die Leitungen 30, 31 parallel zum Gleichrichter 25 vorgesehen. Ferner ist in der Leitung 31 ein vorzugsweise verstellbarer Widerstand 32 vorgesehen, mit dem ein Widerstandswert zwischen Elektrode 11 und Düse 23 (z. B. 600Ω) eingestellt werden kann, bei dessen Unterschreiten der Schaltkontakt 27 geöffnet wird.

Die anhand der Zeichnung vorstehend beschriebene Vorrichtung arbeitet wie folgt:
Die Stromquelle 14 wird durch Schließen des Kontaktes 42 eingeschaltet. Ferner wird über den Gleichrichter 25 das Relais 26 erregt und schließt den Kontakt 27, so daß über die Verbindungsleitungen 12, 17 zwischen der Elektrode 11 und deren Werkstück 16 Leerlaufspannung anliegt. Erfolgt nun eine Berührung der Elektrode 11 mit der Düse 23 (Kurzschluß), so wird das Relais 26 ebenfalls kurzgeschlossen, aufgrund des reduzierten Stromflusses das Relais entregt, der Kontakt 27 geöffnet und die weitere Energiezufuhr zum elektrischen Plasmabogen 33 verhindert. Auch bei einem Ausfall des Gleichrichters 25 wird der Kontakt 27 geöffnet. Sollte bereits vor dem Schließen des Kontaktes 42 ein Kurzschluß zwischen Elektrode 11 und Düse 25 bestehen, so wird das Relais 26 überhaupt nicht erregt und der Kontakt 27 bleibt geöffnet.

Somit wird durch die oben beschriebene Sicherheitseinrichtung vermieden, daß Spannungen größer als 100 Volt an der Düse infolge eines Kurzschlusses zwischen Elektrode und Düse und damit ein hinzureichender Schutz für Bedienungsperson und Vorrichtung bei einer Änderung des elektrischen Widerstandes zwischen Elektrode und Düse insbesondere bei einem Kurzschluß erreicht wird.

Beim Ausführungsbeispiel wurde die Meßeinrichtung mit einem Relais verwirklicht. Es ist jedoch auch möglich, die Meßeinrichtung aus Halbleiterbauelementen oder integrierten Schaltkreisen aufzubauen.

Die Erfindung ist neben dem beschriebenen Plasmabrenner mit übertragenem Plasmabogen auch bei Plasmabrennern mit nicht übertragenem Plasmabogen einsetzbar. Auch ist die Erfindung bei Lichtbogenbrennern, insbesondere WIG-Brennern, einsetzbar. Auch bei Konstantspannungsquellen kann die Erfindung Verwendung finden.

**Patentansprüche**

1.  Verfahren zum Schweißen oder Schneiden mit einem mit elektrischem Bogen arbeitenden Brenner, vorzugsweise Plasmabrenner, dadurch gekennzeichnet, daß bei einer Änderung des elektrischen Widerstandes zwischen Elektrode (11) und Düse (23), insbesondere bei einem Kurzschluß von Elektrode (11) und Düse (23), des Plasmabrenners (10) ein Steuersignal gebildet und einem Schaltglied (26) eingespeist wird, das in Abhängigkeit davon die Energiezufuhr zum elektrischen Bogen (33) verhindert.

2.  Verfahren nach Anspruch 1, dadurch gekennzeichnet, daß der elektrische Widerstand zwischen der Düse (23) und der Elektrode (11) gemessen, mit einem Sollwert verglichen und hieraus das Steuersignal gebildet wird.

3.  Vorrichtung zur Durchführung des Verfahrens nach Anspruch 1 oder 2, dadurch gekennzeichnet, daß an die Elektrode (11) und die Düse (23) des Plasmabrenners (10) ein Hilfsstromkreis (24) angeschlossen ist, in dem eine Spannungsquelle, vorzugsweise Gleichspannungsquelle (25) und ein Schaltglied (26) angeordnet sind und daß weiterhin der Schaltgliedkontakt (27) im Stromkreis (43) der Konstantstromquelle (14) liegt.

4.  Vorrichtung nach Anspruch 3, dadurch gekennzeichnet, daß das Schaltglied (26) parallel sowohl zu Düse (13) und Elektrode (11) als auch zur Gleichspannungsquelle (25) vorgesehen ist.